Europäisches Patentamt

**European Patent Office**

**Office européen des brevets**

(19)

(11) Numéro de publication: **0 029 475**

**A1**

(12) # DEMANDE DE BREVET EUROPEEN

(21) Numéro de dépôt: **79420058.4**

(22) Date de dépôt: **23.11.79**

(51) Int. Cl.³: **F 16 B 37/10**

(43) Date de publication de la demande:
**03.06.81 Bulletin 81/22**

(84) Etats Contractants Désignés:
**AT BE CH DE GB IT LU NL SE**

(71) Demandeur: **SIAMP CEDAP REUNIES Société anonyme dite:**
**4, quai Antoine 1er**
**Monaco(MC)**

(72) Inventeur: **Bailet, Jean-Claude**
**rue Edith Duhamel**
**Villefranche sur Mer Alpes-Maritimes(FR)**

(72) Inventeur: **De Bella, Rocco**
**Via Vincenzo**
**Bagnara-Calabria Fonda Caro 11 Calabria(IT)**

(74) Mandataire: **Maureau, Bernard et al,**
**Cabinet GERMAIN & MAUREAU Le Britannia - Tour C 20,**
**Boulevard Eugène Déruelle**
**F-69003 Lyon(FR)**

(54) **Dispositif de serrage ou de blocage d'un objet sur une tige.**

(57) Ce dispositif est constitué par un élément (2) qui, réalisé en une matière dure et élastique, délimite un volume creux pouvant être traversé par la tige (3) considérée, cet élément présentant deux paires de fentes longitudinales symétriques par rapport à un plan médian longitudinal, chaque paire de fentes possédant une fente (4) relativement large et une fente (5) relativement étroite dans le prolongement l'une de l'autre et séparées par un pont de matière (6), les deux ponts de matière correspondant aux deux paires de fentes étant également symétriques par rapport au plan précité, l'extrémité de l'élément situé du côté des fentes les plus étroites étant équipée de moyens d'accrochage (8) sur la tige, qui présente un profil complémentaire.

Application à l'équipement d'abattants de cuvettes de WC.

FIG.1

EP 0 029 475 A1

Croydon Printing Company Ltd.

1

La présente invention a pour objet un dispositif de serrage ou de blocage d'un objet sur une tige.

Il est fréquent de réaliser la fixation d'un objet sur un support à l'aide d'un dispositif à vis et écrou. Tel est le cas, notamment pour la fixation d'un abattant de cuvette de WC. Dans ce cas, le dispositif comprend une tige filetée dont la tête prend appui sur la partie fixe de l'abattant, traverse celle-ci puis une ouverture ménagée dans la cuvette, un écrou étant vissé sur la tige filetée, qui vient en appui sur la face inférieure de la cuvette et assure le blocage de l'ensemble.

L'inconvénient d'une telle solution est que les manoeuvres nécessitées par le vissage sont rendues difficiles du fait de la mauvaise accessibilité des organes à manoeuvrer.

La présente invention vise à remédier à ces inconvénients.

A cet effet, le dispositif qu'elle concerne est constitué par un élément qui, réalisé en une matière dure et élastique, délimite un volume creux pouvant être traversé par la tige considérée, cet élément présentant deux paires de fentes longitudinales symétriques par rapport à un plan médian longitudinal, chaque paire de fentes possédant une fente relativement large et une fente relativement étroite dans le prolongement l'une de l'autre et séparées par un pont de matière, les deux ponts de matière correspondant aux deux paires de fentes étant également symétriques par rapport au plan précité, l'extrémité de l'élément situé du côté des fentes les plus étroites étant équipée de moyens d'accrochage sur la tige, qui présente un profil complémentaire, la section de l'ouverture ménagée entre les moyens d'accrochage, lorsque le dispositif est au repos, correspondant à la section de la tige sur laquelle le serrage ou le blocage d'un objet doit être réalisé.

L'élément selon l'invention, avantageusement réalisé en matière synthétique, forme donc une espèce de pince déformable et susceptible de revenir dans sa position initiale sous l'effet de l'élasticité de la matière. Par appui entre deux doigts de l'utilisateur du côté de l'élément où sont ménagées les fentes les plus larges, est réalisé l'écartement des lèvres situées de part et d'autre des fentes les moins larges. Les moyens d'accrochage de l'élément sur une tige sont donc en position ouverte, de telle sorte que l'élément peut coulisser librement sur celle-ci. Lorsque la pression exercée sur l'élément est relâchée, les deux lèvres situées du côté des fentes étroites reprennent leur position initiale en se rapprochant, de telle sorte que les moyens d'accrochage qui leur sont associés coopèrent de nouveau avec la tige pour assurer le blocage en translation de l'élément sur celle-ci.

Afin de faciliter la manoeuvre du dispositif, la longueur des fentes larges est supérieure à la longueur des fentes étroites. La déformation est ainsi obtenue, compte tenu du couple important, sans que l'effort exercé par l'utilisateur soit important.

Selon une première forme d'exécution de l'invention, l'élément creux présente, du côté où sont ménagées des fentes étroites, un taraudage axial.

Dans ce cas, l'élément selon l'invention est un écrou. Cet écrou permet la réalisation d'une approche rapide par écartement des lèvres dans lesquelles est ménagé le taraudage, jusqu'à ce que l'extrémité de l'élément vienne en appui sur l'objet à serrer ou à bloquer.

Lorsque l'élément est en butée contre cet objet, il est procédé à la fermeture de la pince par relâchement de la pression exercée sur l'élément, de telle sorte que le taraudage de celui-ci vienne en prise avec le filetage de la tige. Il est alors procédé au blocage en faisant pivoter l'élément sur la tige filetée à la manière d'un écrou traditionnel.

3

Selon une autre forme d'exécution de l'invention, l'élément creux présente du côté où sont ménagées des fentes étroites des parties faisant saillie vers l'intérieur.

La tige ou le tube associé à l'élément creux présente des évidements permettant l'engagement des parties en saillie ménagées dans les lèvres de celui-ci. Il est procédé à la mise en place par ouverture de la pince puis, lorsque l'on est dans la position désirée, à l'engagement des parties en saillie de l'élément creux, dans les évidements de la tige ou du tube. Dans ce cas là, le dispositif sert essentiellement de butée pour le blocage d'un élément, ceci compte tenu du fait que le positionnement de l'élément sur la tige filetée n'est pas continu étant donné que les évidements sont ménagés par place dans celui-ci.

Selon une autre forme d'exécution de l'invention, l'élément creux présente, du côté où sont ménagées des fentes étroites, des parties en creux.

Dans ce cas, la tige ou le tube sur lequel est engagé l'élément présente des parties renflées pouvant être coiffées par les parties en creux ménagées dans les lèvres de l'élément pour assurer le positionnement de celui-ci.

Selon une caractéristique pouvant être prévue dans toutes les formes d'exécution précitées, la partie de l'élément dans laquelle sont ménagées des fentes étroites est de forme tronconique, la petite base se trouvant du côté de son extrémité libre et la grande base se trouvant du côté des ponts de matière la reliant à la partie dans laquelle sont ménagées les fentes larges.

Dans ce cas, il convient que l'objet à serrer ou à bloquer présente une ouverture pour le passage de la tige de section comprise entre les sections minimale et maximale de la portée tronconique.

De cette façon, la portée tronconique est engagée dans cette ouverture, ce qui empêche l'écartement des lèvres de l'élément et évite par suite tout déblocage

4

accidentel du dispositif. Cette forme assure un auto-serrage qui augmente au fur et à mesure qu'augmente l'effort de vissage, dans le cas où il s'agit d'un écrou à approche rapide. Cette forme tronconique se justifie également par l'autoserrage qu'elle procure lorsqu'est exercé sur l'élément un effort dû à un tirage ou à une charge à supporter, dans des applications concernant des tirants d'extraction ou des tiges supports de canalisations, par exemple. Cette partie tronconique n'est pas nécessaire pour l'utilisation comme simple butée ou support, auquel cas une forme avant plate ou cylindrique en épaulement suffit. Dans ce cas, ce sont les parties en saillie de la pièce ou du support qui assurent la tenue pour des efforts ou des poids modérés. Pour des efforts ou poids plus importants, la partie avant cylindrique s'engage dans un trou de l'objet à supporter ou à positionner de manière à empêcher l'ouverture accidentelle de la pince.

De toute façon, l'invention sera bien comprise à l'aide de la description qui suit, en référence au dessin schématique annexé représentant, à titre d'exemples non limitatifs, plusieurs formes d'exécution de ce dispositif :

Figure 1 est une vue en perspective d'une première forme d'exécution de ce dispositif;

Figures 2 à 4 sont trois vues en coupe de ce dispositif correspondant à trois phases de la réalisation du serrage d'un abattant de cuvette de WC;

Figures 5 à 9 sont des vues en coupe de variantes d'exécution de ce dispositif.

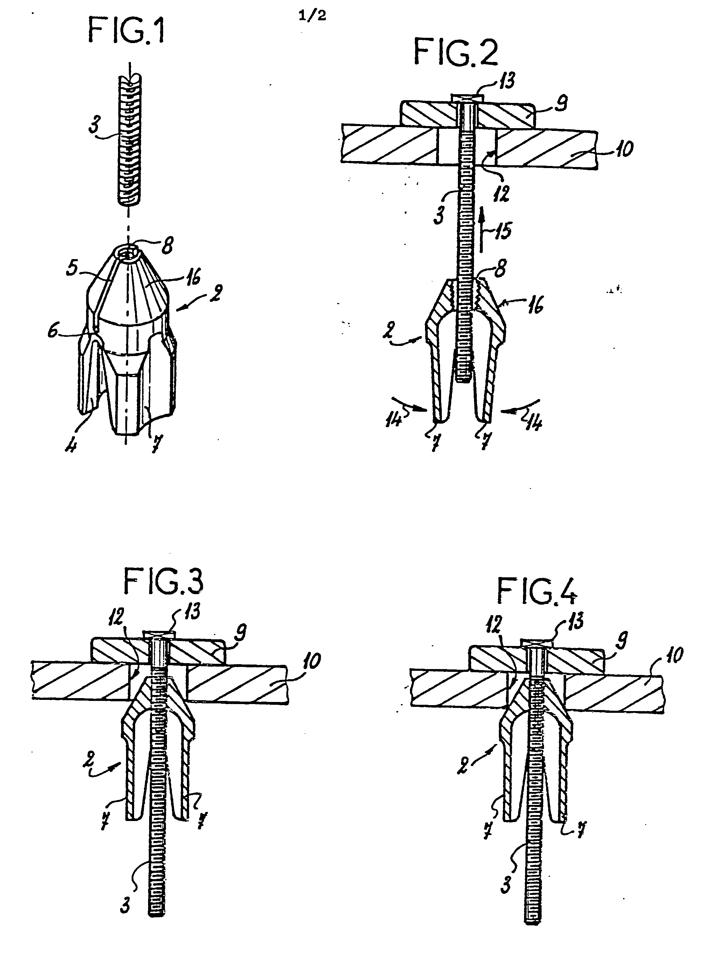

Le dispositif représenté aux figures 1 à 4 comprend un élément 2 réalisé en une matière synthétique dure et élastique. Cet élément délimite un volume creux permettant l'engagement sur une tige filetée 3. Cet élément présente deux paires de fentes longitudinales symétriques par rapport à un plan médian longitudinal. Chaque paire de fentes possède une fente 4 relativement large et une fente 5 relativement étroite dans le prolongement l'une de l'autre et séparées par un pont de matière 6. Les deux ponts de

5

matière 6 correspondant aux deux paires de fentes sont également symétriques par rapport au plan médian longitudinal précité.

Les fentes 4 sont de longueur supérieure à celle des fentes 5. L'extrémité située du côté des fentes 4 présente deux surfaces 7 profilées en forme de poussoirs. L'extrémité située du côté des fentes étroites 5 forme deux lèvres à l'intérieur desquelles est ménagé un taraudage axial 8 permettant un vissage sur la tige filetée 3.

L'utilisation de cet élément 2, qui forme un écrou à serrage rapide est explicitée ci-après en référence aux figures 2 à 4 présentant le serrage d'un abattant 9 pour cuvette de WC 10. La tige filetée 3 est engagée de façon connue dans l'abattant 9 qu'elle traverse, avant de traverser une ouverture 12 ménagée dans la cuvette 10. La tête 13 de la tige filetée 3 vient en appui sur l'abattant 9.

L'utilisateur exerce une pression sur les deux poussoirs 7 selon les flèches 14, ce qui provoque l'ouverture des lèvres dans lesquelles est ménagé le taraudage 8. De ce fait, il est possible, comme montré à la figure 2, de réaliser une approche rapide de l'élément 2 selon la flèche 15 sans avoir à procéder à aucun vissage.

Il est à noter que, dans le cas présent, la partie située du côté des fentes 5 possède une surface externe 16 de forme tronconique. Lorsque la surface 16 arrive en contact contre les bords de l'ouverture 12 de la cuvette, comme montré à la figure 3, il est procédé à un relâchement de la pression exercée sur les poussoirs 7. Le taraudage 8 revient donc en prise avec la tige filetée 3. Il est alors procédé, comme montré à la figure 4, à un vissage traditionnel par rotation de l'élément 2 selon les flèches 17 sur la tige filetée, afin de réaliser le blocage de l'ensemble.

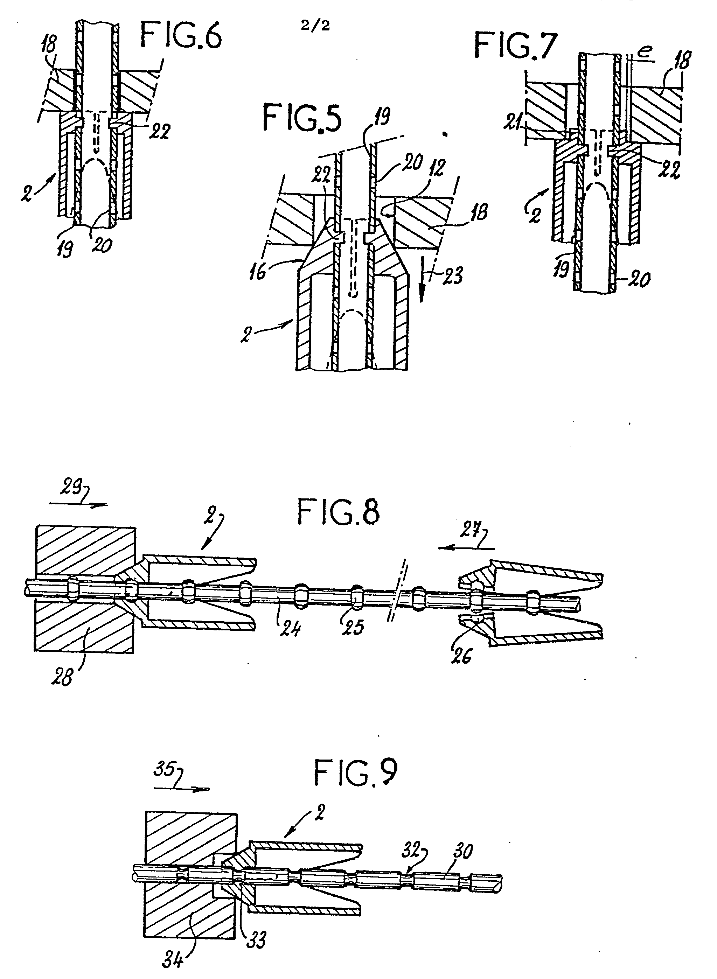

Les figures 5 à 9 correspondent à des variantes d'exécution de ce dispositif dans lesquelles l'élément 2 ne joue pas le rôle d'écrou de serrage, mais constitue une butée permettant de réaliser le blocage ou la retenue d'une pièce relativement à un tube ou une tige.

Dans le cas de la figure 5, il s'agit de réaliser le positionnement d'une pièce 18 sur un tube 19. A cet effet, ce tube présente de loin en loin des ouvertures 20. La partie de l'élément 2 située du côté des fentes étroites 5 présente, faisant saillie sur la face interne de ses lèvres, deux éléments 22. Il est tout d'abord procédé au positionnement de l'élément 2 par engagement des parties en saillie 22 de celui-ci dans les ouvertures 20 situées au niveau choisi sur le tube 19.

Il est ensuite procédé à la mise en place de la pièce 18 par déplacement de celle-ci dans le sens de la flèche 23 jusqu'à ce qu'elle vienne en appui sur la surface tronconique 16 de l'élément 2.

La figure 6 concerne une variante de réalisation du dispositif de figure 5, dans laquelle la face d'appui de l'élément 2 n'est pas tronconique, mais plate, correspondant à un plan transversal à l'axe. Dans ce cas, ce sont les saillies 22 qui assurent la tenue par engagement dans des ouvertures 20. Cet agencement convient pour des tenues à des efforts ou poids modérés.

La figure 7 correspond à une autre variante de réalisation de ce dispositif, selon laquelle la face antérieure de l'élément 2 comporte un épaulement cylindrique central 21 apte à pénétrer à l'intérieur de l'ouverture 12 de la pièce 18. Le jeu latéral $e$, prévu entre l'épaulement 21 et l'ouverture 12, est inférieur à la longueur des parties en saillie 22.

Ceci évite que, sous l'effet d'un effort relativement important, la pince de l'élément 2 s'ouvre suffisamment pour que ses parties en saillie 22 échappent au tube 19.

Les figures 8 et 9 correspondent à deux variantes d'exécution de ce second dispositif.

Dans le cas de la figure 8, il s'agit de réaliser le blocage de l'élément 2 sur une tige 24 présentant des renflements 25. A cet effet, les lèvres de l'élément 2 présentent des évidements 26 de forme complémentaire des renflements 25. Le positionnement de l'élément 2 est réalisé par ouverture des lèvres, comme montré à la partie droite de la fig. 6 et déplacement selon la flèche 27. Lorsque l'élément 2 est dans la position désirée, la pression exercée sur les poussoirs est relâchée et les évidements 26 viennent coiffer un renflement 25 de la tige 24. La pièce 28 à retenir est alors amenée au contact de l'élément 2 par déplacement le long de la tige dans le sens de la flèche 29.

Dans le cas de la forme d'exécution représentée à la figure 9, une tige 30 présente une série d'évidements 32. Pour sa part, l'élément 2 présente des parties 33 faisant saillie vers l'intérieur de ses lèvres, aptes à être engagées dans un évidement 32 pour réaliser le blocage d'une pièce 34 amenée sur la tige 30 dans le sens de la flèche 35.

Comme il ressort de ce qui précède, l'invention apporte une grande amélioration par rapport aux ensembles connus en fournissant un dispositif de conception simple, d'emploi très pratique et susceptible de multiples applications : c'est ainsi qu'outre l'application à la fixation d'abattants de cuvettes de WC indiquée précédemment, ce dispositif peut par exemple être utilisé dans les domaines suivants :

- montage (et démontage) rapide d'éléments de menuiserie bois, plastique ou métallique;

- montage et démontage rapides de brides de fixation de batteries;

- taquets supports d'étagère à mise en place et réglage rapides;

8

- butée de positionnement ou de fin de course sur axe fileté, perforé ou cranté;

- mise en place et réglage rapides de tirants, par exemple sur des extracteurs de roulements, bagues, etc....

- dans le bâtiment : application à la fixation des tiges et tirants, supports de faux plafonds, chemins de câbles, canalisations pour montage et mise de niveau rapide, etc....

Comme il va de soi, l'invention ne se limite pas aux seules formes d'exécution de ce dispositif décrites ci-dessus à titre d'exemples; elle en embrasse, au contraire toutes les variantes de réalisation. C'est ainsi notamment que, si l'élément 2 est avantageusement réalisé en une matière synthétique, il serait tout-à-fait possible de le réaliser en tout autre matériau à condition que celui-ci permette une déformation élastique au niveau des ponts de matière 6.

9

REVENDICATIONS

1.- Dispositif de serrage ou de blocage d'un objet sur une tige, caractérisé en ce qu'il est constitué par un élément qui, réalisé en une matière dure et élastique, délimite un volume creux pouvant être traversé par la tige considérée, cet élément présentant deux paires de fentes longitudinales symétriques par rapport à un plan médian longitudinal, chaque paire de fentes possédant une fente relativement large et une fente relativement étroite dans le prolongement l'une de l'autre et séparées par un pont de matière, les deux ponts de matière correspondant aux deux paires de fentes étant également symétriques par rapport au plan précité, l'extrémité de l'élément situé du côté des fentes les plus étroites étant équipée de moyens d'accrochage sur la tige, qui présente un profil complémentaire, la section de l'ouverture ménagée entre les moyens d'accrochage, lorsque le dispositif est au repos, correspondant à la section de la tige sur laquelle le serrage ou le blocage d'un objet doit être réalisé.

2.- Dispositif selon la revendication 1, caractérisé en ce que la longueur des fentes larges est supérieure à la longueur des fentes étroites.

3.- Dispositif selon l'une quelconque des revendications 1 et 2, caractérisé en ce que l'élément creux présente, du côté où sont ménagées des fentes étroites, un taraudage axial.

4.- Dispositif selon l'une quelconque des revendications 1 et 2, caractérisé en ce que l'élément creux présente, du côté où sont ménagées des fentes étroites, des parties faisant saillie vers l'intérieur.

5.- Dispositif selon l'une quelconque des revendications 1 et 2, caractérisé en ce que l'élément creux présente, du côté où sont ménagées des fentes étroites, des parties en creux.

6.- Dispositif selon l'une quelconque des revendications 1 à 5, caractérisé en ce que la partie de l'élément dans laquelle sont ménagées des fentes étroites

est de forme tronçonique, la petite base se trouvant du côté de son extrémité libre et la grande base se trouvant du côté des ponts de matière la reliant à la partie dans laquelle sont ménagées les fentes larges.

7.- Dispositif selon l'une quelconque des revendications 1 à 5, caractérisé en ce que l'extrémité de l'élément dans laquelle sont ménagées des fentes étroites est plate, et située dans un plan transversal à l'axe de l'ensemble.

8.- Dispositif selon la revendication 7, caractérisé en ce que l'extrémité plane présente un prolongement central de forme cylindrique, de diamètre inférieur à celui de l'ouverture de l'objet coopérant avec l'élément formant pince.

9.- Application du dispositif selon l'une quelconque des revendications 1 à 6 à la fixation d'abattants de cuvettes de WC.

# FIG.1

# FIG.2

# FIG.3

# FIG.4

0029475

2/2

FIG.6

FIG.5

FIG.7

FIG.8

FIG.9

**RAPPORT DE RECHERCHE EUROPEENNE**

Office européen des brevets

Numéro de la demande

EP 79 42 0058.4

| Catégorie | Citation du document avec indication, en cas de besoin, des parties pertinentes | Revendication concernée |
|---|---|---|
| | DE – C – 276 584 (MÜLLER)<br>* fig. 7, 8 *<br>--- | 1 |
| | DE – A1– 2 723 614 (ALLIBERT EXPLOITATION)<br>* fig. 3, 4 *<br>-- | 1,2,9 |
| | DE – U – 6 903 000 (BRODERSEN)<br>* fig. 1, 2 *<br>-- | 1 |
| | FR – A – 387 360 (KRÜGER et al.)<br>* fig. 1, 3 *<br>-- | 1-5 |
| | FR – A – 1 382 310 (KERVAZO)<br>* fig. 4, 5 *<br>-- | 1,6 |
| | FR – A – 2 165 221 (RAPID)<br>* fig. 3, 4 *<br>-- | 1,6 |
| A | DE – B2 – 1 928 490 (ITO AKIRA)<br>-- | |
| A | DE – U – 7 200 944 (OWO-PRESSWERK)<br>-- | |
| A | DE – A – 2 128 140 (AMP)<br>-- | |

./..

## DOCUMENTS CONSIDERES COMME PERTINENTS

**CLASSEMENT DE LA DEMANDE (Int. Cl.³)**

F 16 B 37/10

**DOMAINES TECHNIQUES RECHERCHES (Int. Cl.³)**

A 47 K 13/26

F 16 B 37/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

[X] Le présent rapport de recherche a été établi pour toutes les revendications

| Lieu de la recherche | Date d'achèvement de la recherche | Examinateur |
|---|---|---|
| Berlin | 08-07-1980 | ZAPP |

OEB Form 1503.1  06.78

**Office européen
des brevets**

**RAPPORT DE RECHERCHE EUROPEENNE**

| DOCUMENTS CONSIDERES COMME PERTINENTS | | | CLASSEMENT DE LA DEMANDE (Int. Cl.) |
|---|---|---|---|
| Catégorie | Citation du document avec indication, en cas de besoin, des parties pertinentes | Revendication concernée | |
| A | <u>DD - A - 64 171</u> (HUCK MANUFACTURING CO.)<br><br>-- | | |
| A | <u>FR - A - 1 283 722</u> (CARR FASTENER)<br><br>---- | | |
| | | | **DOMAINES TECHNIQUES RECHERCHES (Int. Cl.)** |

OEB Form 1503.2    06.78